(19) **Europäisches Patentamt
European Patent Office
Office européen des brevets**

(11) **EP 2 777 144 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **12770006.0**

(22) Anmeldetag: **13.09.2012**

(51) Int Cl.:
*H02M 7/5387* (2007.01)    *H02P 27/06* (2006.01)
*H02M 1/00* (2006.01)

(86) Internationale Anmeldenummer:
**PCT/EP2012/067960**

(87) Internationale Veröffentlichungsnummer:
**WO 2013/068156 (16.05.2013 Gazette 2013/20)**

(54) **VERFAHREN ZUM KALIBRIEREN EINES MEHRPHASIGEN WECHSELRICHTERS, VORRICHTUNG ZUM BETREIBEN, COMPUTERPROGRAMM, COMPUTER-PROGRAMMPRODUKT**

METHOD FOR CALIBRATING A MULTIPHASE INVERTER, OPERATING APPARATUS, COMPUTER PROGRAM, AND COMPUTER PROGRAM PRODUCT

PROCÉDÉ D'ÉTALONNAGE D'UN ONDULEUR MULTIPHASÉ, DISPOSITIF POUR FAIRE FONCTIONNER UN PROGRAMME D'ORDINATEUR ET PRODUIT DE PROGRAMME D'ORDINATEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.11.2011 DE 102011086177**

(43) Veröffentlichungstag der Anmeldung:
**17.09.2014 Patentblatt 2014/38**

(73) Patentinhaber: **Robert Bosch GmbH
70442 Stuttgart (DE)**

(72) Erfinder:
• **DAMSON, Mark
70499 Stuttgart (DE)**
• **RAICHLE, Daniel
71665 Vaihingen (DE)**

(56) Entgegenhaltungen:
**US-B1- 6 172 509**

EP 2 777 144 B1

**Beschreibung**

Die Erfindung betrifft ein Verfahren zum Kalibrieren eines mehrphasigen, insbesondere drei-phasigen Wechselrichters, insbesondere eines Pulswechselrichters, der für jede seiner Phasen jeweils ein hochspannungsseitiges Schaltelement und jeweils ein niederspannungsseitiges Schaltelement sowie für zumindest zwei der Phasen jeweils einen Stromsensor aufweist.

Ferner betrifft die Erfindung eine Vorrichtung zum Betreiben eines derartigen Wechselrichters, sowie ein Computerprogramm und ein Computer-Programmprodukt.

Stand der Technik

Zum Ansteuern elektrischer Maschinen, insbesondere zum Ansteuern von Drehfeldmaschinen, werden Wechselrichter vorgesehen, die drei insbesondere in einer Sternschaltung oder Dreieckschaltung geschaltete Phasen der elektrischen Maschine mit Strom versorgen. Üblicherweise weisen derartige Wechselrichter für jede der Phasen ein hochspannungsseitiges und ein niederspannungsseitiges Schaltelement auf, die unabhängig voneinander schaltbar sind und eine Brückenschaltung zum Ansteuern der elektrischen Maschine bilden. Typischerweise ist zumindest zwei der Phasen ein Stromsensor zugeordnet, der dem Wechselrichter nachgeschaltet ist, um den durch den Wechselrichter bereitgestellten Strom zu erfassen. Fehler in den gemessenen Strömen führen zum einen zu Fehlern in den berechneten Drehmomenten der elektrischen Maschine und zum anderen auch zu Momentenschwingungen, die sich negativ auf ein Antriebsverhalten der elektrischen Maschine auswirken. Um die Genauigkeit der Stromerfassung zu verbessern, wird häufig eine Kalibrierung des Wechselrichters beziehungsweise dessen Stromsensorik durchgeführt, wobei Offsetfehler der Stromsensorik üblicherweise im stromlosen Zustand erfasst werden, also wenn sämtliche Schaltelemente des Wechselrichters geöffnet sind und sich die elektrische Maschine nicht dreht. Dabei wird der Strom gemessen und dann mit dem gemessenen Wert ein Offset der Stromsensorik kompensiert. Aus der Patentschrift US 6,172,509 B1 ist ein Verfahren zum Erfassen eines Windungsschlusses im normalen Betrieb eines Wechselrichters bekannt, bei welchem die Phasenströme von drei Phasen eines Wechselrichters erfasst und gemittelt werden.

Offenbarung der Erfindung

Das erfindungsgemäße Verfahren mit den Merkmalen des Anspruchs 1 hat den Vorteil, dass Verstärkungsfehler der Strommessung auf einen Mittelwert reduziert und insbesondere die Unterschiede in den Verstärkungsfehlern, die sich für die Stromregelung negativ auswirken können, kompensiert werden. Dazu ist erfindungsgemäß vorgesehen, dass (a) zunächst alle Schaltelemente des Wechselrichters ausgeschaltet beziehungsweise deaktiviert werden, (b) anschließend ein hochspannungsseitiges Schaltelement einer ersten Phase und ein Niederspannungsseitiges Schaltelement einer zweiten Phase eingeschaltet werden, (c) die durch die ersten und zweiten Phase fließenden Ströme mittels entsprechender Stromsensoren jeweils gemessen werden, (d) aus den gemessenen Strömen ein Mittelwert gebildet und (e) in Abhängigkeit des so bestimmten Mittelwertes der Wechselrichter und insbesondere dessen Stromsensorik kalibriert werden. Durch das Ausschalten aller Schaltelemente werden zunächst alle Phasen deaktiviert, so dass in keiner Phase ein Strom fließen sollte. Anschließend wird bei zwei Phasen jeweils ein Schaltelement, nämlich bei einer Phase ein hochspannungsseitiges und bei einer anderen Phase ein niederspannungsseitiges Schaltelement aktiviert, so dass die mindestens eine weitere, dritte Phase stromfrei bleibt. Die in den Phasen gemessenen Ströme, in welchen das jeweilige Schaltelement aktiviert wurde, werden zum Bilden eines Mittelwertes verwendet und in Abhängigkeit dieses Mittelwertes der Wechselrichter kalibriert. Insbesondere werden dadurch, wie bereits erwähnt, Verstärkungsfehler reduziert. Darüber hinaus wird dafür gesorgt, dass der verbleibende Verstärkungsfehler bei allen Stromsensoren gleich ist, wozu das Verfahren vorzugsweise für die übrigen Stromsensoren und Phasen wiederholt wird.

Vorzugsweise wird zur Kalibrierung davon ausgegangen, dass der Betrag eines realen Stroms des Wechselrichters, insbesondere der reale Strom der gemessenen Phasen, dem gebildeten Mittelwert der Beträge der gemessenen Ströme entspricht.

Weiterhin wird bevorzugt vor Schritt (b) zunächst geprüft, ob der Strom in allen Phasen gleich Null ist. Ist dies nicht der Fall, wird solange abgewartet, bis der gewünschte Zustand erreicht ist. Dies erfolgt insbesondere bei Wechselrichtern mit nur zwei Phasen.

Gemäß einer alternativen Ausführungsform, insbesondere bei Wechselrichtern mit drei oder mehr Phasen, ist bevorzugt vorgesehen, dass vor Schritt (b) zunächst geprüft wird, ob der Strom in zumindest der Phase gleich Null ist, die in Schritt (b) nicht bestromt wird beziehungsweise nicht bestromt werden soll. Damit ist sichergestellt, dass bei der folgenden Bestromung von zwei Phasen beziehungsweise Stängen kein Strom durch die dritte Phase beziehungsweise den dritten Strang fließt.

Zu einer vorteilhaften Weiterbildung der Erfindung ist vorgesehen, dass das Verfahren wiederholt wird bis alle möglichen Mittelwerte des Wechselstromrichters erfasst wurden beziehungsweise alle möglichen Kombinationen von Schaltelementeinschaltungen gemäß Schritt (b) durchgeführt wurden. Damit lassen sich die Unterschiede der Verstärkungsfehler, die sich auf die Regelung besonders negativ auswirken können, insgesamt kompensieren.

Besonders bevorzugt werden die jeweiligen Schaltelemente nur derart kurz angesteuert, dass eine durch den Wechselrichter angesteuerte elektrische Maschine kein Drehmoment erzeugt. Hierdurch wird gewährleistet, dass bei der Durchführung der Kalibrierung die elektrische Maschine kein Drehmoment erzeugt, welches sich beispielsweise als Antriebsdrehmoment an Antriebsrädern eines Kraftfahrzeugs auswirken könnte, sofern die elektrische Maschine als eine Antriebseinheit eines Fahrzeugs beziehungsweise Kraftfahrzeugs vorgesehen ist. Alternativ kann während der Kalibrierung auch ein Signal ausgegeben werden, das bewirkt, dass eine zwischen der elektrischen Maschine und einem Antriebsstrang befindliche Kupplung geöffnet wird, so dass eine Drehung der elektrischen Maschine keine Auswirkung auf die Umwelt, insbesondere das Antriebssystem, hat.

Die erfindungsgemäße Vorrichtung zur Durchführung des Verfahrens weist ein speziell hergerichtetes Steuergerät auf, das Mittel zur Durchführung des Verfahrens enthält, wobei das Steuergerät einen elektrischen Speicher aufweist, in welchem die Verfahrensschritte als Steuergerätprogramm abgelegt sind.

Das erfindungsgemäße Computerprogramm sieht vor, dass alle Schritte des erfindungsgemäßen Verfahrens ausgeführt werden, wenn es auf einem Computer abläuft.

Das erfindungsgemäße Computer-Programmprodukt mit einem auf einem maschinelesbaren Träger gespeicherten Programmcode führt das erfindungsgemäße Verfahren aus, wenn das Programm auf einem Computer abläuft.

Im Folgenden soll die Erfindung anhand der Zeichnungen näher erläutert werden. Dazu zeigt die einzige

Figur:     einen drei-phasigen Wechselrichter zum Ansteuern einer Drehfeldmaschine.

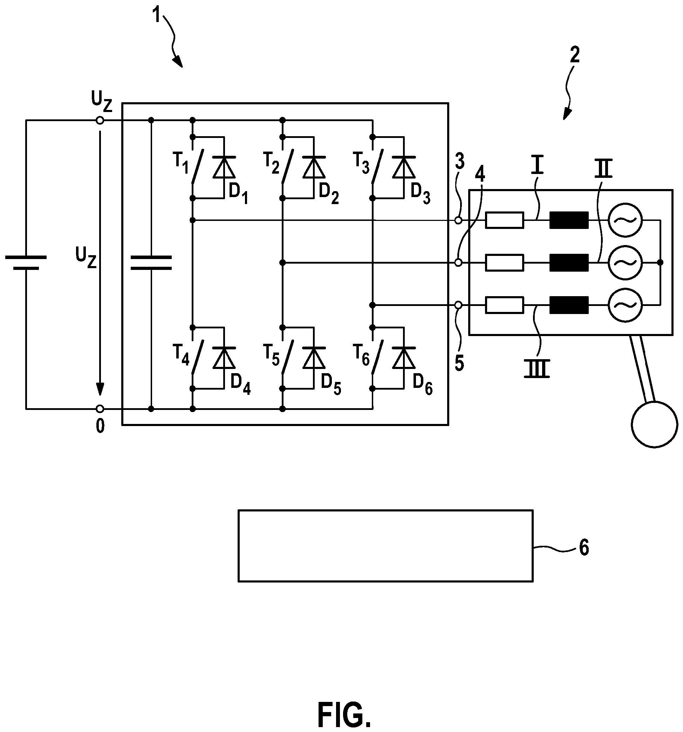

Die Figur zeigt in einer schematischen Darstellung einen Wechselrichter 1, der an einer Drehfeldmaschine 2 zu deren Betrieb angeschlossen ist. Die Drehfeldmaschine 2, die beispielsweise als Asynchronmaschine ausgebildet ist, weist drei Stränge beziehungsweise Phasen I, II und III auf. Die Phasen I, II und III sind beispielsweise in einer Sternschaltung miteinander verbunden. Der Wechselrichter 1 weist zur Ansteuerung der Phase I, II und III eine Brückenschaltung auf. Diese weist für die Phase I ein hochspannungsseitiges Schaltelement $T_1$ sowie ein niederspannungsseitiges Schaltelement $T_4$ auf. Dem hochspannungsseitigen Schaltelement $T_1$ ist dabei eine Freilaufdiode $D_1$ und dem Schaltelement $T_1$ eine Freilaufdiode $D_4$ jeweils parallel zugeordnet. Weiterhin weist die Brückenschaltung ein hochspannungsseitiges Schaltelement $T_2$ und ein niederspannungsseitiges Schaltelement $T_5$ für die Phase II auf. Dem Schaltelement $T_2$ ist dabei eine Freilaufdiode $D_2$ und dem Schaltelement $T_5$ eine Freilaufdiode D5 jeweils parallel zugeordnet. Entsprechend verhält es sich mit der Ansteuerung der Phase III. Dieser sind ein hochspannungsseitiges Schaltelement $T_3$ sowie eine parallel dazu geschaltete Freilaufdiode $D_3$ und ein niederspannungsseitiges Schaltelement $T_6$ sowie eine parallel dazu geschaltete Freilaufdiode $D_6$ zugeordnet. Der Aufbau des Wechselrichters 1 ist grundsätzlich bekannt, so dass hierauf nicht näher eingegangen werden soll.

Jeder Phase I, II und II ist weiterhin ein Stromsensor 3, 4 beziehungsweise 5 zugeordnet, der den durch den jeweiligen Strang beziehungsweise durch die jeweilige Phase I, II und III fließenden Strom erfasst. Einem Steuergerät 6 werden die erfassten Werte zugespielt, wobei das Steuergerät 6 die Schaltelemente $T_1$ bis $T_6$ ansteuert, um die elektrische Maschine beziehungsweise Drehfeldmaschine 2 zu betreiben.

Im Idealfall sieht der Zusammenhang zwischen einem berechneten Strom I und einen gemessenen Stromwert x eines Analog-Digital-Wandlers, der als Stromsensor dient, so aus: $I(x)=bx$, wobei b eine Verstärkung darstellt.

In der Realität wird dieser Zusammenhang noch durch Offsetfehler, Verstärkungsfehler und nicht Linearitäten der Stromsensorik, also insbesondere der Stromsensoren 3, 4 und 5, verfälscht, so dass der berechnete Strom I sich wie folgt bestimmt: $I(x) = a+b_{real}x+cx^2\,dx^3$, wobei x der Digitalwert des Analog-Digital-Wandlers ist, a ein Offset(fehler) ist, $b_{real}$ die reale Verstärkung bedeutet, die nicht der theoretischen Verstärkung b entspricht, und c und d Nichtlinearitäten der Sensorik bedeuten. Wenn die Nichtlinearität nicht berücksichtigt wird, dann gilt: $c = d = 0$. Natürlich ist es aber auch denkbar, noch weitere Nichtlinearitäten zu berücksichtigen.

Durch das im Folgenden beschriebene Verfahren wird eine vorteilhafte Kalibrierung des Wechselrichters 1 durchgeführt, die insbesondere zu einer Korrektur von Verstärkungsfehlern dient. Dazu wird zunächst geprüft, ob der Strom in allen drei Phasen I, II und III gleich Null ist. Hierzu werden zunächst alle Schaltelemente $T_1$ - $T_6$ geöffnet beziehungsweise deaktiviert. Fließt in einer der Phasen I, II und III weiterhin ein Strom, dann wird solange abgewartet bis auch hier der Strom gleich Null ist.

Anschließend wird in dem vorliegenden Ausführungsbeispiel jeweils ein hochspannungsseitiger Schalter $T_1$ einer Phase und ein niederspannungsseitiges Schaltelement $T_5$ einer andere Phase III eingeschaltet, während die vier anderen Schalter $T_2$, $T_3$, $T_4$ und $T_6$ und ausgeschaltet beziehungsweise deaktiviert bleiben. Dadurch muss über zwei der Stromsensoren 3 und 4 der gleiche Strom (in unterschiedliche Richtung) fließen. Zur Korrektur wird nun davon ausgegangen, dass der Betrag des realen Stroms dem Mittelwert der Beträge der beiden gemessenen Ströme entspricht.

Damit kann zum einen der Verstärkungsfehler auf den Mittelwert der Verstärkungsfehler der einzelnen Sensoren 3, 4 reduziert werden. Außerdem können die Unterschiede in den Verstärkungsfehlern, die sich für die Regelung besonders negativ auswirken, kompensiert werden. Es kann also in einfacher Weise die Verstärkung korrigiert werden. Mit weiteren Messungen wäre jedoch auch die Korrektur der Nichtlinearität möglich, wobei dann vorzugsweise für jeden weiteren Koeffizienten mindestens eine weitere Messung bei einem anderen Stromniveau durchgeführt wird. Im Folgenden wird beispielhaft nur die Korrektur der Verstärkung beschrieben.

Bezugnehmend auf das oben stehende Beispiel werden mittels der Sensoren 3 und 4 die Ströme $I_1$ und $I_2$ der Phasen I und II gemessen, wobei $I_1 = -100A$ und $I_2 = 110A$ ist. Hieraus ergeben sich die Korrekturfaktoren $m_{1posKor}$ und $M_{2negKor}$ wie folgt:

$$m_{1posKor} = (I_1-I_2)/(2 \cdot I_1) \approx 1,05$$

und

$$m_{2negKor} = (I_2-I_1)/(2 \cdot I_2) \approx 0,95$$

Anschließend werden die Schaltelemente $T_2$ und $T_4$ geschlossen, während die übrigen vier Schaltelemente $T_1$, $T_5$, $T_3$ und $T_6$ geöffnet werden beziehungsweise bleiben. Als gemessene Ströme ergeben sich hierbei $I_1 = -96A$ und $I_2 = 100A$, wobei sich daraus Korrekturwerte wie folgt ergeben:

$$m_{1negKor} = (I_1-I_2)/(2 \cdot I_1) \approx 1,03$$

und

$$m_{2posKor} = (I_1-I_1)/(2 \cdot I_2) \approx 0,97$$

Es kann nun zum Beispiel entweder ein gemittelter Korrekturfaktor ermittelt werden:

$$m_{1Kor} = (m_{1posKor} + m_{1negKor})/2$$

$$m_{2Kor} = (m_{2posKor} + m_{2negKor})/2$$

oder es kann die jeweilige Übertragungskennlinie aus zwei Geraden zusammengesetzt werden.

$$I = a+m_{1posKor} \cdot b \cdot x \qquad \text{für } x \geq 0$$
$$I$$
$$I = a + m_{1negKor} \cdot b \cdot x \qquad \text{für } x < 0$$

Während das oben beschriebene Verfahren mit nur zwei Stromsensoren 3, 4 durchführbar ist, kann bei Verwendung von drei Stromsensoren 3, 4 und 5 jeder Sensor 3, 4 und 5 immer mit beiden anderen Sensoren 3, 4 und 5 verglichen werden. Dabei ergibt sich beispielsweise folgendes Schema:

| Geschlossene Schaltelemente | Gemessene Ströme |
|---|---|
| $T_1$, $T_5$ | $I_{1A}$, $-I_{2A}$ |
| $T_1$, $T_6$ | $I_{2B}$, $-I_{3B}$ |
| $T_2$, $T_4$ | $I_{2C}$, $-I_{1C}$ |
| $T_2$, $T_6$ | $I_{2D}$, $-I_{3D}$ |
| $T_3$, $T_4$ | $I_{3E}$, $-I_{1E}$ |

(fortgesetzt)

| Geschlossene Schaltelemente | Gemessene Ströme |
|---|---|
| $T_3$, $T_5$ | $I_{3F}$, $-I_{2F}$ |

Der erste Index bei den gemessenen Strömen steht für den jeweiligen Stromsensor beziehungsweise für die jeweilige Phase I, II oder III und der zweite Index für die jeweilige Messung. Damit kann zum Beispiel der Korrekturfaktor $m_{1posKor}$ wie folgt berechnet werden:

$$m_{1posKor} = \frac{1}{4} \cdot \left( \frac{I_{1A} - I_{2A}}{I_{1A}} + \frac{I_{1B} - I_{3B}}{I_{1B}} \right)$$

Die Berechnung für die anderen Korrekturfaktoren ergibt sich entsprechend. Die Möglichkeit entweder die positiven oder negativen Korrekturfaktoren zu einem mittleren Korrekturfaktor zu ermitteln oder die Kennlinien in zwei Teilbereiche unterschiedlicher Steigung zu unterteilen besteht ebenso wie bei zwei Sensoren.

Durch die Bestromung wird in der Regel auch ein Drehmoment der Drehfeldmaschine 2 erzeugt. Daher ist vorgesehen, dass entweder eine Kupplung zwischen der Drehfeldmaschine 2 und einem darauf folgenden Antriebsstrang geöffnet wird, so dass eine Drehung der Drehfeldmaschine 2 keine Auswirkungen auf den Antriebsstrang hat, oder die Stromimpulse werden durch entsprechendes Ansteuern der Schaltelemente $T_1$ bis $T_6$ durch das Steuergerät 6 derart kurz gewählt, dass dadurch das aufgebrachte Drehmoment keine Auswirkungen, insbesondere keine ungewollte Beschleunigung, auf das Gesamtsystem, insbesondere eines die Drehfeldmaschine 2 aufweisenden Fahrzeugs entstehen.

**Patentansprüche**

1. Verfahren zum Kalibrieren eines mehrphasigen, mindestens dreiphasigen Wechselrichters (1), der für jede seiner Phasen (I, II, III) jeweils ein hochspannungsseitiges Schaltelement (T1, T2, T3) und jeweils ein niederspannungsseitiges Schaltelement (T4, T5, T6) sowie für zumindest einige der Phasen jeweils einen Stromsensor (3, 4, 5) aufweist, **gekennzeichnet durch** folgende Schritte:

   (a) Ausschalten aller Schaltelemente (T1 - T6),
   (b) Einschalten eines hochspannungsseitigen Schaltelements (T1) einer ersten Phase (I) und eines niederspannungsseitigen Schaltelements (T5) einer zweiten Phase (II), sodass mindestens eine weitere, dritte Phase (III) stromfrei bleibt,
   (c) Messen der durch die erste (I) und die zweite Phase (II) fließenden Ströme,
   (d) Bilden eines Mittelwertes aus den gemessenen Strömen und
   (e) Kalibrieren des Wechselrichters (1) in Abhängigkeit des gebildeten Mittelwertes.

2. Verfahren nach Anspruch 1, **dadurch gekennzeichnet, dass** zur Kalibrierung angenommen wird, dass der Betrag eines realen Stroms des Wechselrichters (1) dem gebildeten Mittelwert der Beträge der gemessenen Ströme entspricht.

3. Verfahren nach einem der vorhergehenden Ansprüche, **dadurch gekennzeichnet, dass** vor Schritt (b) zunächst geprüft wird, ob der Strom in allen Phasen gleich Null ist.

4. Verfahren nach einem der vorhergehenden Ansprüche, **dadurch gekennzeichnet, dass** vor Schritt (b) zunächst geprüft wird, ob der Strom in zumindest der Phase gleich Null ist, die in Schritt (b) nicht bestromt wird.

5. Verfahren nach einem der vorhergehenden Ansprüche, **dadurch gekennzeichnet, dass** das Verfahren wiederholt wird, bis alle möglichen Mittelwerte des Wechselrichters (1) erfasst wurden.

6. Verfahren nach einem der vorhergehenden Ansprüche, **dadurch gekennzeichnet, dass** die jeweiligen Schaltelemente (T1 - T6) nur derart kurz angesteuert werden, dass eine durch den Wechselrichter (1) angesteuerte elektrische Maschine (2) kein Drehmoment erzeugt.

7. Vorrichtung zur Durchführung des Verfahrens nach einem der Ansprüche 1 bis 6, **gekennzeichnet durch** ein speziell hergerichtetes Steuergerät (6), das Mittel zur Durchführung des Verfahrens enthält, wobei das Steuergerät (6) einen elektrischen Speicher aufweist, in welchem die Verfahrensschritte als Steuerprogramm abgelegt sind.

8. Computerprogramm, das alle Schritte eines Verfahrens nach einem der Ansprüche 1 bis 6 ausführt, wenn das Programm auf einem Computer läuft.

9. Computer-Programmprodukt mit einem auf einem maschinenlesbaren Träger gespeicherten Programmcode zur Durchführung des Verfahrens nach einem der Ansprüche 1 bis 6, wenn das Programm auf einem Computer ausgeführt wird.

**Claims**

1. Method for calibrating a multiphase, at least three-phase inverter (1), which has, for each of its phases (I, II, III), in each case one switching element (T1, T2, T3) on the high-voltage side and in each case one switching element (T4, T5, T6) on the low-voltage side and, for at least some of the phases, in each case one current sensor (3, 4, 5), **characterized by** the following steps:

   (a) switching off all of the switching elements (T1-T6),
   (b) switching on a switching element (T1) on the high-voltage side of a first phase (I) and a switching element (T5) on the low-voltage side of a second phase (II), so that at least one further, third phase (III) remains without current,
   (c) measuring the currents flowing through the first phase (I) and the second phase (II),
   (d) generating a mean value from the measured currents and
   (e) calibrating the inverter (1) depending on the generated mean value.

2. Method according to Claim 1, **characterized in that** for the calibration it is assumed that the absolute value of a real current of the inverter (1) corresponds to the generated mean value of the absolute values of the measured currents.

3. Method according to one of the preceding claims, **characterized in that**, prior to step (b), a check is initially performed to ascertain whether the current in all phases is equal to zero.

4. Method according to one of the preceding claims, **characterized in that**, prior to step (b), a check is initially performed to ascertain whether the current in at least that phase which is not energized in step (b) is equal to zero.

5. Method according to one of the preceding claims, **characterized in that** the method is repeated until all possible mean values of the inverter (1) have been detected.

6. Method according to one of the preceding claims, **characterized in that** the respective switching elements (T1-T6) are only actuated for a short period of time in such a way that an electric machine (2) actuated by the inverter (1) does not generate any torque.

7. Apparatus for implementing the method according to one of Claims 1 to 6, **characterized by** a specially designed control device (6) which contains means for implementing the method, wherein the control device (6) has an electrical memory, in which the method steps are stored as a control program.

8. Computer program which implements all of the steps of a method according to one of Claims 1 to 6 when the program is running on a computer.

9. Computer program product comprising a program code stored on a machine-readable storage medium for implementing the method according to one of Claims 1 to 6 when the program is executed on a computer.

**Revendications**

1. Procédé pour étalonner un onduleur polyphasé, ou au moins triphasé, qui présente pour chacune de ses phases (I, II, III) respectivement un élément de commutation côté haute tension (T1, T2, T3) et respectivement un élément de commutation côté basse tension (T4, T5, T6) ainsi que pour au moins certaines des phases, respectivement un capteur de courant (3, 4, 5),
**caractérisé par** les étapes consistant à :

(a) mettre hors circuit tous les éléments de commutation (T1 - T6),
(b) mettre en circuit un élément de commutation côté haute tension (T1) d'une première phase (I) et un élément de commutation côté basse tension (T5) d'une deuxième phase (II), de manière à ce qu'au moins une autre phase, ou troisième phase (III), ne soit pas alimentée en courant,
(c) mesurer les courants passant à travers les première (I) et deuxième phases (II),
(d) établir une moyenne des courants mesurés et
(e) étalonner l'onduleur (1) en fonction de la moyenne établie.

2. Procédé selon la revendication 1, **caractérisé en ce qu'**il est tenu compte, pour l'étalonnage, du fait que la valeur d'un courant réel de l'onduleur (1) correspond à la moyenne établie des valeurs des courants mesurés.

3. Procédé selon l'une quelconque des revendications précédentes, **caractérisé en ce que**, avant l'étape (b), il est tout d'abord vérifié si le courant passant dans toutes les phases est égal à zéro.

4. Procédé selon l'une quelconque des revendications précédentes, **caractérisé en ce que**, avant l'étape (b), il est tout d'abord vérifié si le courant passant dans au moins la phase non alimentée en courant lors de l'étape (b) est égal à zéro.

5. Procédé selon l'une quelconque des revendications précédentes, **caractérisé en ce que** le procédé est répété jusqu'à ce que toutes les moyennes possibles de l'onduleur (1) aient été détectées.

6. Procédé selon l'une quelconque des revendications précédentes, **caractérisé en ce que** les éléments de commutation respectifs (T1 - T6) ne sont commandés que pendant une courte période de manière à ce qu'une machine électrique (2) commandée par l'onduleur (1) ne produise aucun couple de rotation.

7. Dispositif destiné à mettre en oeuvre le procédé selon l'une quelconque des revendications 1 à 6, **caractérisé par** un appareil de commande (6) spécialement configuré qui comporte des moyens destinés à mettre en oeuvre le procédé, dans lequel l'appareil de commande (6) comporte une mémoire électrique dans laquelle les étapes du procédé sont stockées sous la forme d'un programme de commande.

8. Programme d'ordinateur mettant en oeuvre toutes les étapes d'un procédé selon l'une quelconque des revendications 1 à 6 lorsque le programme est exécuté sur un ordinateur.

9. Produit de programme d'ordinateur comportant un code de programme stocké sur un support lisible par machine pour mettre en oeuvre le procédé selon l'une quelconque des revendications 1 à 6 lorsque le programme est exécuté sur un ordinateur.

FIG.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6172509 B1